(19) Europäisches Patentamt
European Patent Office
Office européen des brevets

(11) Publication number: **0 223 371 B1**

# EUROPEAN PATENT SPECIFICATION

(12)

(45) Date of publication of patent specification:
27.03.91 Bulletin 91/13

(51) Int. Cl.⁵: **G02C 3/02**

(21) Application number: **86307607.1**

(22) Date of filing: **02.10.86**

(54) Spectacles, visors and the like.

(30) Priority: **07.10.85 ZA 857704**

(43) Date of publication of application:
**27.05.87 Bulletin 87/22**

(45) Publication of the grant of the patent:
**27.03.91 Bulletin 91/13**

(84) Designated Contracting States:
**AT BE CH DE ES FR GB GR IT LI LU NL SE**

(56) References cited:
**US-A- 2 609 538**
**US-A- 4 152 051**
**US-A- 4 387 471**
**US-A- 4 549 793**

(73) Proprietor: **McAllen, Terry**
**253 Manor Farm Road**
**Bitterne Park Southampton (GB)**

(72) Inventor: **McAllen, Terry**
**253 Manor Farm Road**
**Bitterne Park Southampton (GB)**

(74) Representative: **Leale, Robin George et al**
**FRANK B. DEHN & CO. Imperial House 15-19**
**Kingsway**
**London WC2B 6UZ (GB)**

## Description

This invention relates to a combination of an article of head gear, and spectacles, a visor or the like.

Conventional spectacles, visors, sun-glasses etc. include side elements which hang around the ears for support. The spectacles etc. are supported on the bridge of the nose and on the ears.

United States Patent 2 609 538 relates to a pair of goggles which is suspended from a head band by temple connections. A bridge between the goggles is joined by a spring, and the bridge rests on the nose of the wearer. One of the objects of the present invention is to avoid the spectacles resting on the nose of the wearer.

In United States Patent 4 387 471 the spectacles do not rest on the nose of the wearer but are not supported by a headband, but rather to a surgical hood ; and in particular are not attached in the manner envisaged by the present invention.

In United States Patent 4 152 051 a pair of eyeglasses is suspended from a headband at a single point above the nose to prevent contact with the nose. It is not supported at the temple zones and the particular means of attachment of the present invention is not disclosed.

The present invention comprises a combination of an article of headgear having a forehead band, and spectacles, a visor or the like having two rearwardly-directed temple members, each having means for disconnectable suspensive attachment to the article of headgear, rearwardly thereof, characterised in that said means for attachment of each of said rearwardly-directed temple members comprises an upwardly-directed formation terminating in a flat zone attachable to the article of headgear ; and in that said spectacles, visor or the like also comprise a third upwardly-directed formation located in the front zone of said spectacles, visor or the like and also terminating in a flat zone attachable to the article of headgear, from wardly thereof, the three flat zones being rotatable, tiltable and adjustable.

In this specification the term "headgear" is intended to include headbands, hats, caps, turbans and any other form of headgear.

In one preferred embodiment, conventional side elements of the spectacles or the like are disconnectable from the frame and substitutable with other elements adapted to be removably attached to an article of headgear.

The attachment means of the visor, spectacles or the like to the headband is preferably the product known under the Trade Mark VELCRO but it will be appreciated that many other fixing arrangements may be used. In this way the visor or spectacles may be easily removed from the headband for the individual items to be cleaned.

The visor or spectacles may be plane perspex or the like material, this being the preferred form for use in sporting activities – for example, skiing, tennis, bicycling and the like. The material may be tinted for protection against glare.

It will be appreciated that this form of the invention is also adaptable to cosmetic purposes and it will be possible to own a series of different headbands and visors or spectacles for wearing at discos and other places of entertainment.

In another embodiment a visor may be adapted to receive one or more lenses – for example reading lenses or the wearer's prescription lenses. For example, the visor may be moulded with pockets for receiving the lenses ; or light filters or the like.

For stability there are at least three points of attachment of the visor to the headband, but it will be appreciated that a continuous attachment is also possible.

Both headband and visor may have space for advertisement and it will be appreciated that a wide variety of shapes, sizes and designs are possible within the scope of the invention.

In yet another embodiment the side elements may include a slot groove or the like for receiving a pin or a formation in sliding relationship, with means such as stops, spring means, screws or the like, for temporary jointing. The elements for attaching to the head band may also include a similar jointing arrangement. Of course, it will be appreciated that the jointing formations may be reversed.

According to an important aspect of the invention a kit is provided which comprises a pair of spectacles, a visor or the like in combination with a pair of conventional side elements and a pair of elements adapted to be attached to a headband or the like. A headband or a number of headbands may also be provided in the kit.

The elements for attaching to the headgear may include formations which can receive a clip or the like having VELCRO on one side, the clip being reversible for attachment either to a headband or the like or to the inside of a hat or other headgear, the inside thereof being provided, if necessary with a complemental strip of VELCRO. This form of invention is particularly suited to bowler hats. The clips may be spring clips and may carry a Logo on one side and VELCRO on the other.

Some embodiments of the invention will now be described by way of example and with reference to the accompanying drawings, in which :

Figure 1 shows a headband to which a pair of spectacles may be releasably attached.

Figure 2 is a perspective view of a pair of spectacles according to one embodiment having adjustable attachment means,

Figures 3-5 show the adjustable attachment means of Figure 2 in more detail,

Figure 6 shows a detail of a form of attachment means.

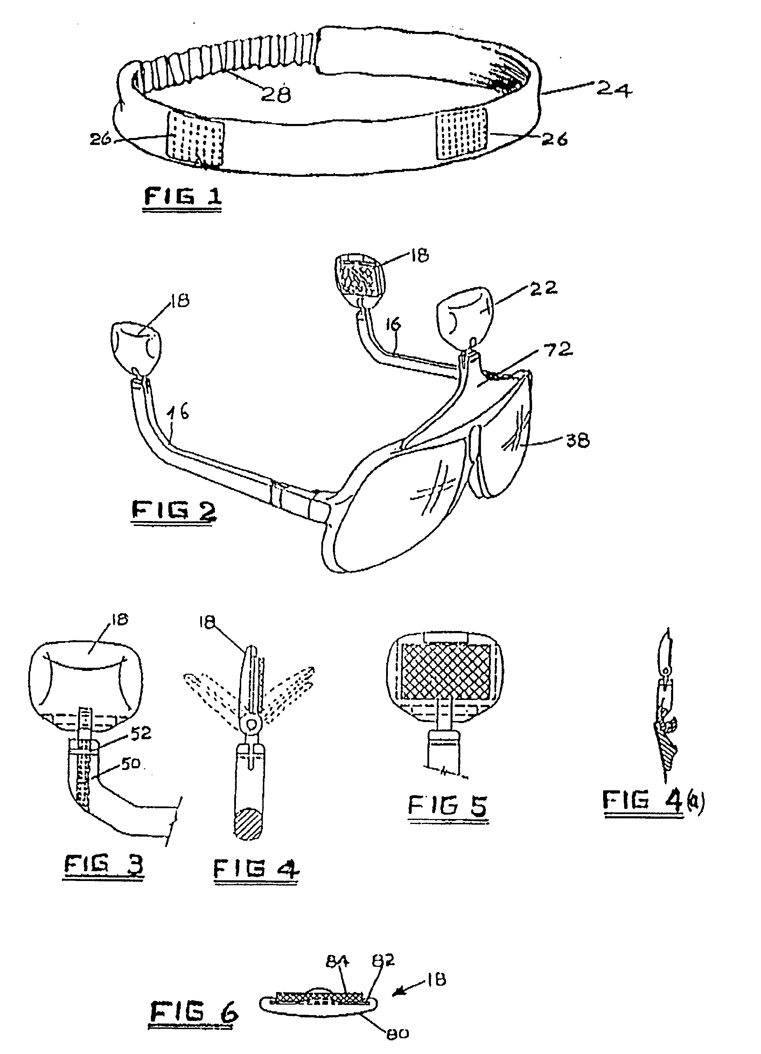

In Figure 1 a headband 24 is depicted with VELCRO adhesion members 26 and an elastic inner member 28.

In Figure 2 a pair of spectacles 38 has a pair of rearwardly-extending elements 16 which terminate in flat portions 18 which are rotatable and tiltable. An additional element 22 is also rotatable and tiltable and is mounted on a formation 72. These elements 18, 22 are also adjustable in height as is shown in more detail in Figures 3 to 5 which show a rebated shaft 50 which can be set at a predetermined height and maintained under tension by means of a spring clip 52.

In Figure 4 and 4(a), two hinge arrangements as well as various positions of the element 18 are shown and it will be appreciated that the shaft 50 allows the elements 18 to be swivelled to any desired angle.

Figure 6 is a plan view of an element 18 (or 22) comprising a polymer material portion 80 into which a metallic plate 82 is fitted for receiving the VELCRO strip 84.

## Claims

1. A combination of an article of headgear having a forhead band (24), and spectalcles, a visor or the like (38) having two rearwardly-directed temple members (16), each having means (18) for disconnectable suspensive attachment to the article of headgear, rearwardly thereof, characterised in that said means for attachment of each of said rearwardly-directed temple members comprises an upwardly-directed formation terminating in a flat zone (18) attachable to the article of headgear ; and in that said spectacles, visor or the like also comprise a third upwardly-directed formation (72) located in the front zone of said spectacles, visor or the like and also terminating in a flat zone (22) attachable to the article of headgear, frontwardly thereof, the three flat zones being rotatable, tiltable and adjustable.

## Ansprüche

1. Kombination eines Kopfbedeckungsgegenstands aus einem Stirnband (24) und einer Brille, einem Visier oder dergleichen (38) mit zwei rückwärts gerichteten Schläfenteilen (16), von denen jedes an seiner Rückseite Mittel (18) zur trennbaren Aufhängebefestigung an dem Kopfbedeckungsgegenstand aufweist, **dadurch gekennzeichnet,** daß das Befestigungsmittel jedes der rückwärts gerichteten Schläfenteile eine aufwärts gerichtete Anordnung umfaßt, die in einer an dem Kopfbedeckungsgegenstand befestigbaren flachen Zone (18) endet, und daß die Brille, das Visier oder dergleichen auch eine dritte aufwärts gerichtete Anordnung (72) aufweist, die in der vorderen Zone der Brille, des Visiers oder dergleichen angeordnet ist und auch in einer an der Vorderseite des Kopfbedeckungsgegenstands befestigbaren flachen Zone (22) endet, wobei die drei flachen Zonen drehbar, neigbar und einstellbar sind.

## Revendications

1. Combinaison d'un couvre-chef comportant un bandeau frontal (24), et de lunettes, viseur ou analogue (38) possédant des organes temporaux (16), chaque organe ayant, dans sa partie arrière, des moyens (18) pour le suspendre de manière détachable au couvre-chef, caractérisée en ce que les moyens pour suspendre chacun desdits organes temporaux dirigés vers l'arrière comportent une structure dirigée vers le haut, se terminant en une zone plate (18) pouvant être fixée au couvre-chef, et en ce que les lunettes, le viseur ou analogue comportent également une troisième structure (72) dirigée vers le haut située dans la partie frontale des lunettes, du viseur ou analogue et se terminant également en une zone plane (22) pouvant être fixée au couvre-chef, dans une partie frontale de celui-ci, les trois zones planes étant rotatives, inclinables et ajustables.

FIG 1

FIG 2

FIG 3

FIG 4

FIG 5

FIG 4(a)

FIG 6